# DEMANDE DE BREVET EUROPEEN

(11) **EP 2 410 373 A1**
(43) Date de publication de la demande: **25.01.2012**
(21) Numéro de dépôt: 11174613.7
(22) Date de dépôt: 20.07.2011
(51) Int. Cl.: G02F 1/1333, G02B 1/10, G02F 1/1339, G02F 1/1341

(54) **Microstructure a parois a propriete optique determinee et procede de realisation de microstructures**

(30) Priorité: 21.07.2010 FR 1055944
(71) Demandeur: Commissariat à l'Énergie Atomique et aux Énergies Alternatives, 75015 Paris (FR)
(72) Inventeur: Deschaseaux, Edouard, 38000 GRENOBLE (FR)
(74) Mandataire: Ilgart, Jean-Christophe

(57) **Abrégé**

L'invention concerne un procédé de formation de cavités (4) d'un dispositif micro-optique, comportant:
a) la formation, sur la surface plane d'un substrat support (10), d'une couche (12) d'un matériau sacrificiel,
b) la formation de parois (6) desdites cavités, le fond desdites cavités (4) étant formé par ladite couche de matériau sacrificiel,
c) le dépôt conforme d'une couche (30) de matériau poreux, sur les sommets (60) des parois, sur les flancs (61,62) des parois, et sur le fond (4') des cavités,
d) la gravure de la couche sacrificielle (12), et l'élimination du matériau de cette couche et du matériau de la couche (30) de matériau poreux présente au fond des cavités (4).

## Description

### DOMAINE TECHNIQUE ET ART ANTERIEUR

L'invention concerne la réalisation de dispositifs contenant des cavités hermétiques de dimensions microniques délimitées par des parois, dans lesquelles un fluide fonctionnel, par exemple des cristaux liquides, est introduit.

L'invention peut par exemple s'appliquer aux domaines dans lesquels on utilise des cristaux liquides orientés dans des cavités scellées, ou pour la réalisation, en optique, de lentilles optiques ou de verres optiques.

Une autre application particulière concerne des composants « optiques » transparents tels que des lentilles diffractives planes où les fluides fonctionnels sont des liquides d'indices optiques prédéfinis.

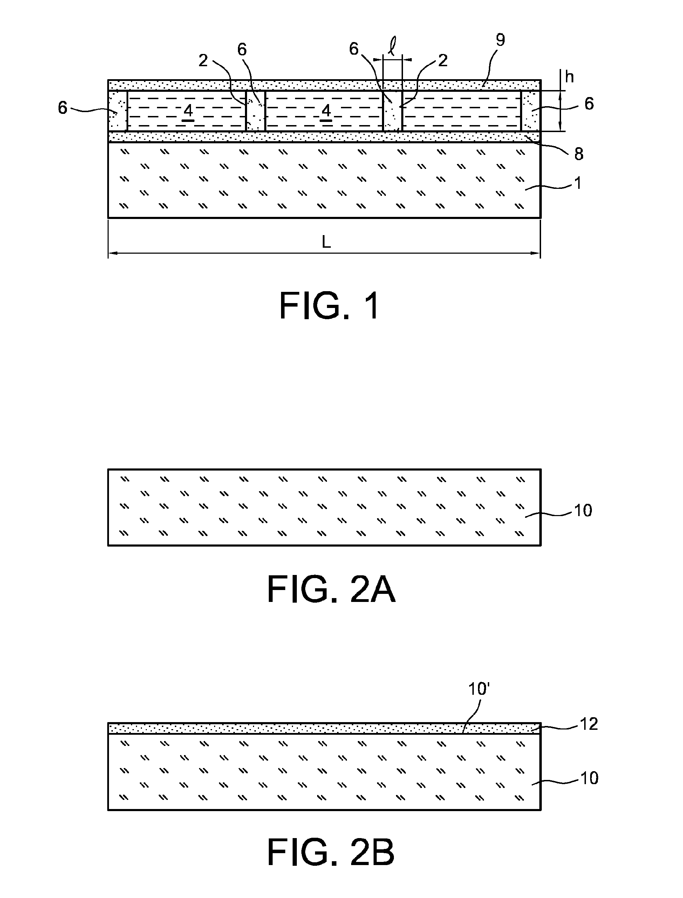

Un exemple d'un tel élément optique est illustré en figure 1. Il a une largeur L pouvant aller jusqu'à 100 mm ou plus.

Il comporte un réseau de micro-cuvettes ou de micro-cavités 2 indépendantes, séparées par des parois 6. Ces micro-cavités sont structurées sur un substrat souple et plan. Les parois 6, et les micro-cavités, peuvent être obtenues par un procédé de type micro-technologie collective, ou par gravure anisotrope d'une résine choisie pour ses propriétés structurales.

On peut ensuite remplir les cavités avec un liquide 4 approprié à l'effet optique recherché.

Puis, les cavités sont fermées par une couche de fermeture 9 en un matériau souple, en général collé sur les sommets des parois 6.

L'ensemble est formé sur un support comportant, dans l'exemple illustré, un substrat 1 en un matériau tel que le quartz et une couche 8 en un matériau polymère.

Un tel élément d'optique peut contenir un nombre de micro-cuvettes qui peut être compris entre cent mille et dix millions.

On cherche à ce que les parois 6 soient les moins visibles possibles. Pour cela, on cherche à réaliser des parois présentant un fort rapport d'aspect (ou facteur de forme), avec une largeur 1 (voir figure 1) faible, typiquement comprise entre 2 µm et 5 µm, pour une hauteur h de résine dans une gamme comprise entre 20 µm et 100 µm.

Toutefois, la présence de ces parois reste une source de défaut, en particulier de transparence de l'élément optique, et plus généralement une source de dégradation de la qualité de l'image formée au travers de l'élément optique et/ou de dégradation des performances de ce dernier. En effet les parois délimitant les pixels peuvent interagir avec la lumière en la diffractant et provoquer, notamment, une perte de transparence.

Une solution est de réaliser des parois 6 absorbantes qui vont absorber tout ou une partie de la lumière, limitant ainsi les phénomènes de diffraction qui sont à l'origine des défauts de transparence de l'élément optique.

On sait qu'on peut réaliser des parois par photolithographie directe d'un matériau photosensible absorbant, mais on n'a pas identifié de matériaux commerciaux qui permettent d'obtenir des parois absorbantes avec une hauteur h suffisamment grande, typiquement supérieure à 20µm, avec une largeur 1 suffisamment faible, typiquement inférieure à 5µm. A ce jour, les matériaux photosensibles absorbants et les techniques de photolithographie associées permettent l'obtention de parois de hauteur maximale de l'ordre de 5µm, ce qui est encore bien inférieur à ce que l'on recherche.

Une autre solution est de rendre absorbantes des parois 6 déjà formées, en leur incorporant un matériau absorbant et/ou des particules absorbantes. Ce résultat peut être obtenu par des techniques de dopage, de diffusion ou encore de trempage. Cette technique ne répond toutefois pas encore complètement aux besoins, car les particules métalliques ou les pigments utilisés sont de tailles trop importantes par rapport aux dimensions 1 et h des parois définies ci-dessus. Pour les colorants, se pose également la question du vieillissement et des effets rapides de perte de caractère absorbant qui en découlent.

Il se pose donc le problème de trouver un nouveau procédé permettant de rendre en particulier absorbantes les parois, les fonds des cavités demeurant généralement transparents. Un tel procédé est de préférence compatible avec la réalisation de cavités à haut rapport de forme, afin de limiter ou d'éliminer les perturbations optiques.

Un autre problème est la réalisation de parois 6 réfléchissantes. C'est notamment le cas en vue d'applications aux écrans mobiles TFT-LCD : une petite partie (4-5%) de structures internes de l'écran est recouverte de microstructures réfléchissantes pour améliorer le contraste. Ainsi, un utilisateur discerne parfaitement les images même si l'écran est exposé à la lumière directe du soleil).

### EXPOSÉ DE L'INVENTION

L'invention concerne d'abord un procédé de formation de cavités d'un dispositif micro-optique, comportant :
a) la formation, sur une surface d'un substrat support, d'une couche d'un matériau sacrificiel,
b) la formation de parois desdites cavités, le fond desdites cavités étant formé par ladite couche de matériau sacrificiel,
c) le dépôt conforme d'une couche de matériau, dite couche optique, présentant une propriété optique déterminée, sur les sommets des parois, sur les flancs des parois, et sur la couche de matériau sacrificiel dans le fond des cavités,
d) la gravure de la couche sacrificielle, et l'élimination du matériau de cette couche et du matériau de la partie de la couche de matériau optique présente au fond des cavités.

La couche de matériau optique est une couche absorbante ou une couche réfléchissante. Si le matériau optique est absorbant, il peut comporter du chrome noir, ou du molybdène noir, ou du carbone amorphe.

Le matériau de la couche sacrificielle comporte par exemple de l'oxyde de silicium SiO2, ou du nitrure de silicium SiN, ou de l'oxyde d'indium dopé à l'étain (ITO) ou du carbone amorphe, ou du molybdène noir, ou encore du chrome noir.

La couche sacrificielle est avantageusement transparente pour une certaine gamme spectrale.

La couche de matériau optique, déposée lors de l'étape c, est avantageusement poreuse. Selon un mode de réalisation, la gravure de la couche sacrificielle peut alors être réalisée à l'aide d'une solution de gravure humide, la porosité de la couche absorbante étant suffisante pour permettre le passage de la solution de gravure vers la couche sacrificielle.

Avantageusement, les parois formées lors de l'étape b) ont un rapport de forme (h/l) compris entre 10 et 20, h étant la hauteur des paroi au dessus de la surface libre du substrat support.

Les parois peuvent être formées en surface de la couche sacrificielle, celle-ci étant continue d'une cavité à l'autre jusque pendant l'étape c, les parois reposant, après l'étape d, sur une portion de matériau sacrificiel.

En variante, la base des parois repose sur, ou même dans, le substrat support lui-même.

L'invention concerne également un procédé de formation d'un dispositif micro-optique, comportant:
- la formation de cavités de ce dispositif, comportant la mise en oeuvre d'un procédé tel que ci-dessus,
- l'introduction d'un ou plusieurs fluides dans lesdites cavités du dispositif,
- la formation d'une couche de fermeture sur les parois des cavités.

L'invention concerne également un dispositif micro-optique, comportant des cavités délimitées par des parois, une couche de matériau optique (au sens déjà défini ci-dessus) étant formée sur les sommets des parois et sur les flancs des parois, tandis que le fond des cavités est transparent.

Selon un mode de réalisation la base de chaque paroi repose sur une portion de matériau sacrificiel, la couche de matériau optique ne recouvrant pas les flancs de cette portion de matériau sacrificiel.

En variante, la base de chaque paroi (6) repose sur le substrat ou dans le substrat, la couche de matériau optique ne recouvrant pas une portion des flancs des parois située à proximité de la surface du substrat.

Chaque cavité peut être remplie au moins partiellement d'un fluide, et l'ensemble des cavités peut être fermée par une couche de fermeture.

Le matériau optique peut avoir une ou plusieurs des propriétés (absorbante ou réfléchissante, poreuse, ...etc.) déjà exposées ci-dessus.

Les parois peuvent avoir une hauteur de l'ordre de quelques µm à quelques dizaines de µm, par exemple comprise entre 1 µm et 100 µm.

Elles peuvent avoir une largeur de l'ordre de quelques µm ou submicronique, par exemple comprise entre 0,5 µm et 5 µm.

### BRÈVE DESCRIPTION DES DESSINS

- La figure 1 représente une structure de cavité connue,
- les figures 2A - 2F représentent des étapes de réalisation d'un procédé selon l'invention,
- les figures 3A-3D représentent certaines étapes de réalisation d'une gravure humide dans un procédé selon l'invention,
- les figures 4A-4G représentent une variante pour la formation des parois des cavités,
- les figures 5A et 5B représentent des étapes de remplissage de cavités avec un liquide, puis de fermeture de ces cavités avec un film.

### EXPOSÉ DÉTAILLÉ DE MODES DE RÉALISATION PARTICULIERS

Un premier mode de réalisation de l'invention va être décrit en liaison avec les figures 2A - 2I.

On prépare d'abord un support, qui peut consister en un simple substrat 10 (figure 2A), par exemple en un matériau polymère tel que le PET ou en verre ou en silicium. En variante, c'est une couche flexible comme du polyéthylène téréphtalate « PET » maintenu par collage temporaire sur un support rigide (ce dernier n'est pas représenté sur les figures).

Sur une surface plane 10' de ce même substrat 10 on forme (figure 2B), une couche plane ou un film plan 12, d'un matériau, dit matériau sacrificiel, d'épaisseur par exemple comprise entre 50 nm et 200 nm.

Ce matériau sacrificiel est avantageusement transparent dans le visible (350-700nm) et le proche/moyen infrarouge (0,7-10µm) selon l'application désirée (imagerie visible ou détection infrarouge) car il reste présent dans le micro-dispositif final sous les parois des micro-cavités. Cette couche 12 est donc en un matériau transparent, c'est par exemple de l'oxyde de silicium SiO2 (efficace dans le visible), ou du nitrure de silicium SiN (efficace en proche IR hormis entre 1,3 et 1,55µm), ou de l'oxyde d'indium dopé à l'étain (ITO) ou encore du carbone amorphe (pour le moyen infrarouge).

Ces différents matériaux peuvent être déposés au moyen de procédés tels que par exemple l'évaporation, ou la PVD, ou la PECVD, ou la CVD, ou l'ALD.

Qu'il soit transparent ou absorbant, on choisit de préférence le matériau sacrificiel 12 de sorte qu'il puisse être gravé ultérieurement avec une solution humide.

On procède ensuite à la structuration des parois 6 des micro-cavités 4.

Suivant l'application envisagée et les performances souhaitées, l'épaisseur de fluide fonctionnel peut être variable :
- une faible épaisseur, proche du micromètre, peut être souhaitée dans des applications de type afficheurs à cristaux liquides ;
- tandis qu'une épaisseur importante, de l'ordre de plusieurs dizaines de microns, est souhaitables dans le cas des lentilles diffractives planes.

On peut donc, si l'on connaît la nature du fluide fonctionnel que l'on veut introduire dans les cavités, adapter la hauteur h de la portion des parois qui est située au dessus de la surface libre du substrat, lors de leur réalisation. Dans certains cas, on cherchera à réaliser des parois de hauteur h de l'ordre du micromètre, par exemple comprise entre 1 µm et 5 µm ou 10 µm, tandis que, dans d'autres cas, on cherchera à réaliser des parois dont la hauteur est de l'ordre de la dizaine de micromètres ou de plusieurs dizaines de micromètres, par exemple comprise entre 10 µm et 100 µm.

Dans le cas de parois dont la hauteur est de l'ordre du µm d'épaisseur (typiquement entre 1 µm et 10 µm), plusieurs techniques peuvent être mises en oeuvre, comme le micromoulage, ou la sérigraphie, ou la photolithographie ou la gravure plasma.

Dans le cas d'une hauteur plus importante (typiquement entre 10 µm et 100 µm), on obtient une largeur 1 de paroi suffisamment faible, de l'ordre du micron et typiquement inférieure à 5µm, par exemple comprise entre 1 µm et 5 µm, par exemple par photolithographie, notamment de résine épaisse. Autrement dit, dans ce cas, la technique de photolithographie est avantageusement préférée à la technique de gravure plasma. Cette technique de photolithographie permet donc l'obtention de parois de hauteur relativement élevée, avec un rapport de forme important, par exemple compris entre 10 et 20.

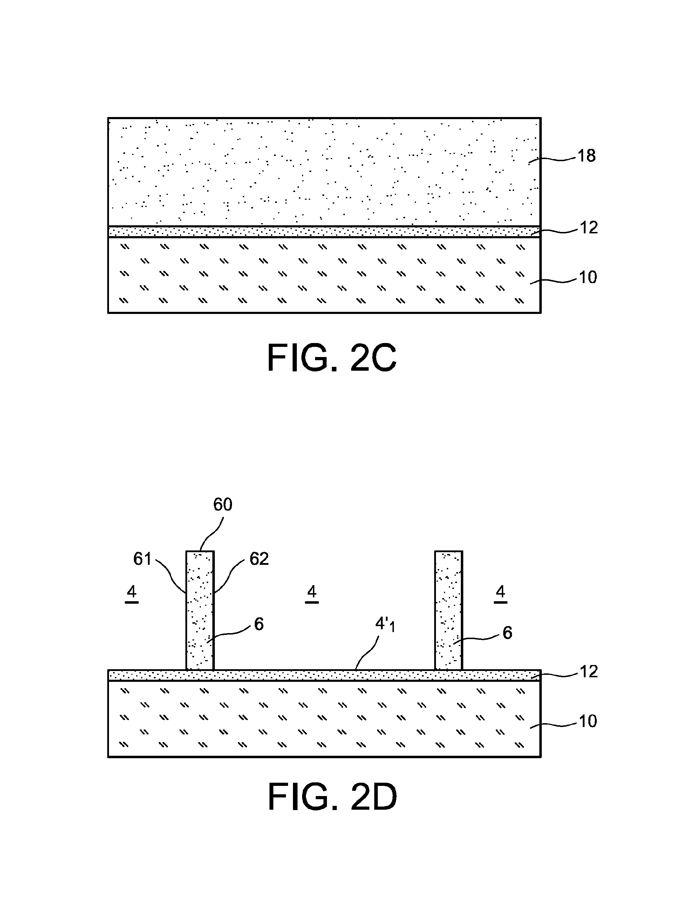

Un exemple de mise en oeuvre de cette dernière technique est représentée en figures 2C et 2D: on dépose une résine épaisse 18 photosensible sur la couche sacrificielle 12. Cette résine est ensuite insolée (figure 2D), avec un masque approprié, puis développée selon les techniques couramment utilisées en micro-électronique.

On obtient ainsi les parois 6 des cavités 4. Elles sont sensiblement perpendiculaires à la surface plane 10' du substrat et à la couche sacrificielle 12. Celle-ci n'est pas ou peu affectée par cette opération de formation des parois.

Il en résulte une structure comportant cette couche 12, qui est continue, plane, et s'étend sous les parois 6 (figure 2D). Ces dernières peuvent avoir un rapport de forme h/l élevé, par exemple entre 10 et 20. La hauteur h des parois obtenues peut être comprise entre 20µm et 100µm, avec une largeur 1 entre 2 µm et 5µm. Mais, comme déjà indiqué ci-dessus, on peut aussi obtenir, par un procédé selon l'invention, des parois ayant des caractéristiques géométriques différentes, et notamment des parois de hauteur plus faible, par exemple inférieure à 10 µm.

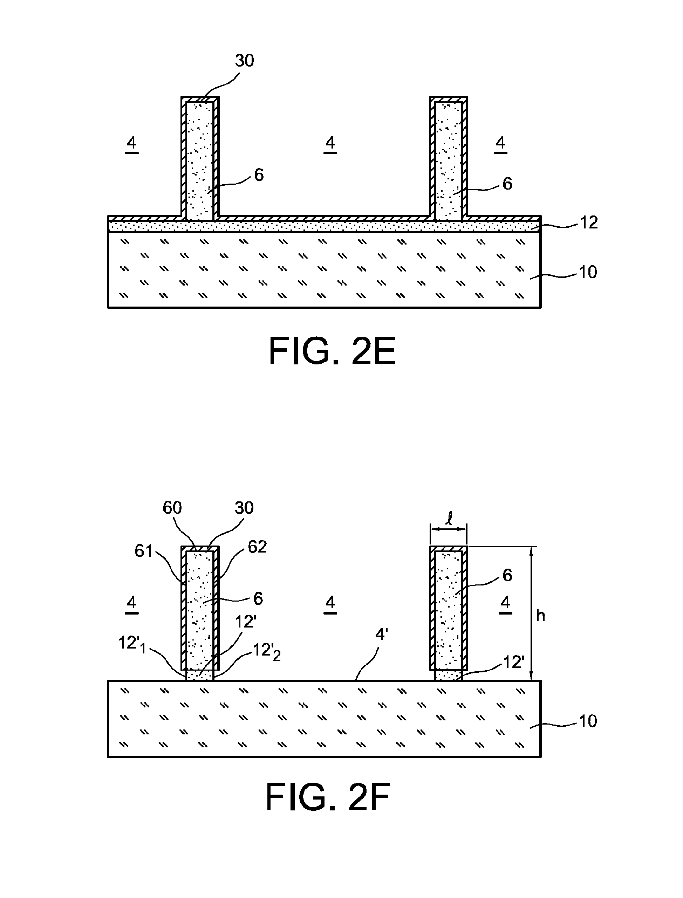

On dépose ensuite (figure 2E) sur l'ensemble du dispositif une couche conforme 30 d'épaisseur typiquement entre 50 nm et 500nm, qui est en un matériau absorbant dans le visible et/ou dans le proche infrarouge et/ou le moyen infrarouge, toujours selon l'application désirée. Cette couche permet d'absorber tout ou une partie de la lumière et de limiter ainsi les phénomènes de diffraction à l'origine des pertes de transparence de l'élément optique. On choisit plutôt du carbone amorphe ou du chrome/molybdène noir pour le domaine spectral visible ou du diamant nanocristallin pour le proche infrarouge et/ou le moyen infrarouge.

Cette couche est appliquée contre, et recouvre de manière continue, le sommet 60 des parois 6, les flancs 61, 62 des parois, et le fond 4'1 des cavités.

Par exemple, la couche de diamant nanocristallin est préférentiellement déposée par dépôt chimique en phase vapeur assistée par plasma (PACVD), la couche de molybdène noir par dépôt chimique en phase vapeur (CVD) et la couche de chrome noir par dépôt physique en phase vapeur (PVD) ou par e-beam évaporation.

De préférence, cette couche absorbante 30 a une porosité suffisante pour permettre l'attaque de la couche sacrificielle 12 par une solution de gravure humide à travers la couche absorbante. On considérera alors une couche non poreuse pour une gamme de porosité inférieure à 10% et une couche poreuse pour des porosités allant de 10% à 50%. Cette porosité peut également être ajustée au moyen des paramètres de dépôt. Par exemple, une couche de chrome noir déposée par « e-beam évaporation » sur un substrat froid a une porosité de l'ordre de 40% et cette porosité descend à 16% lorsque le substrat est chauffé (300°C) durant le dépôt.

On procède donc ensuite à une gravure humide de la couche sacrificielle 12, par exemple au moyen d'une attaque acide ou basique (figure 2F). De préférence, la porosité de la couche absorbante 30 présente en fond 4'1 des cavités est ajustée pour permettre l'attaque de la couche sacrificielle 12 et le retrait de la couche absorbante 30 en fond de cavités par effet « lift-off ».

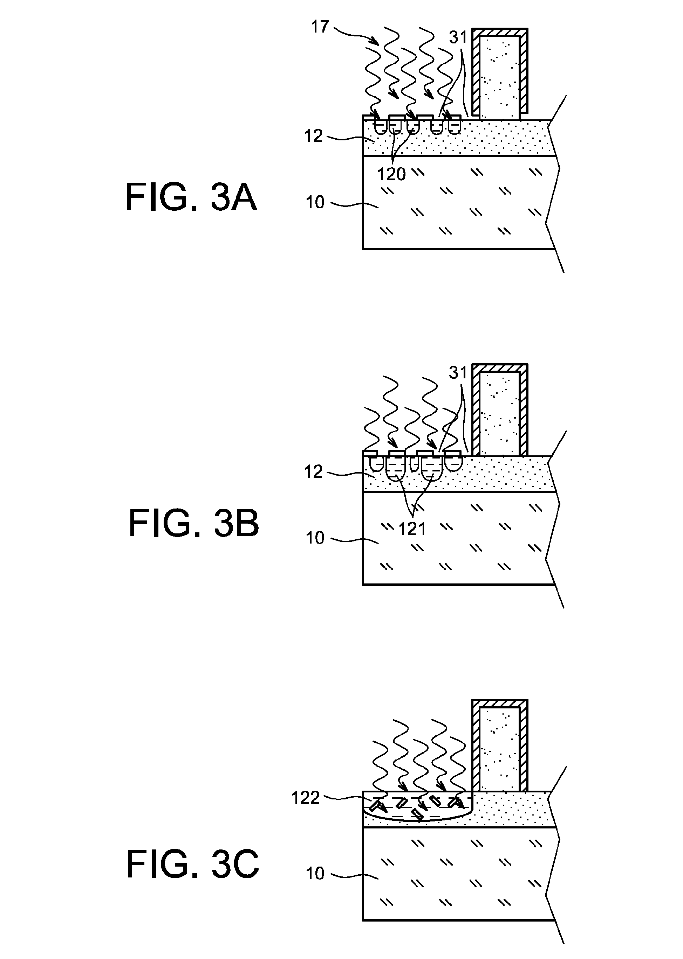

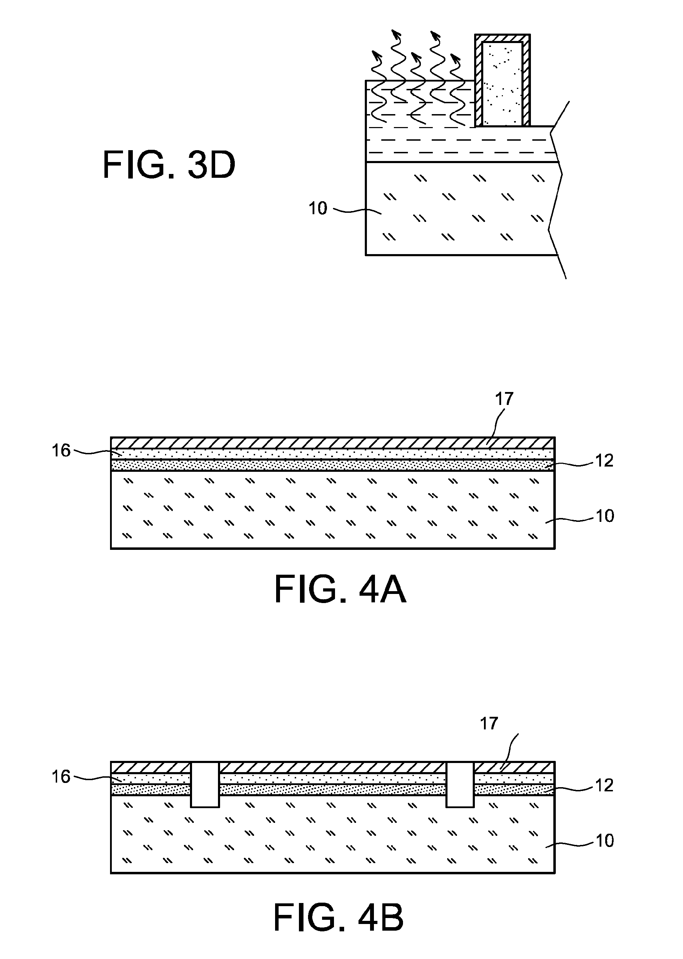

Cette étape est représentée de manière plus détaillée sur les figures 3A - 3D. La solution de gravure passe sous la couche absorbante 30, par les pores 31 de cette dernière, pour graver la couche sacrificielle 12 (figures 3B et 3C) jusqu'à ce que la gravure soit suffisamment avancée pour soulever la partie de la couche absorbante 30 située au fond de la cavité (figure 3D). La quantité de matière absorbante, ainsi soulevée et mélangée avec la solution 17 de gravure, est donc éliminée lors du retrait de cette dernière (figure 3D). Comme on le voit sur ces figures, la solution 17 va progressivement attaquer le matériau de la couche 12 à travers les pores 31, les zones attaquées étant désignées sur les figures 3A - 3C par les références 120, 121, 122, dont la taille va en s'accroissant au fur et à mesure de l'avancée du procédé.

Au final (figure 2F), les sommets 60 et les flancs 61, 62 des parois 6 sont toujours recouverts du matériau absorbant 30. Il y a un reste 12' de couche sacrificielle sous les parois 6, de même largeur que la paroi 6, et la couche 30 ne recouvre pas les flancs 12'1, 12'2 de cette portion 12', sur une hauteur qui est donc sensiblement égale à, ou voisine de, l'épaisseur de cette couche 12'. Les fonds 4' des cavités 4 ainsi formées sont dégagés du matériau 12.

La solution 17 de gravure est choisie comme étant sélective vis-à-vis du matériau constituant la couche absorbante 30 et également vis-à-vis du matériau constituant les parois 6, afin de ne pas graver la couche absorbante que l'on vient de déposer, et de ne pas graver les parois 6. Ainsi, par exemple, la solution de gravure humide sera une solution partiellement diluée d'acide fluorhydrique (HF) tamponnée par du fluorure d'ammonium (NH4F) dans le cas d'une couche sacrificielle 12 en dioxyde de silicium SiO2, d'une couche absorbante 30 en chrome noir et de parois 6 en matériau solgel organosilicié.

La gravure humide est également contrôlée afin de ne pas pousser l'effet « lift-off » jusqu'aux parois par surgravure sous les parois 6. Si la gravure est trop poussée, alors des zones d'attaque de la couche 12 vont également se former sous la paroi 6, qui va perdre sa stabilité. Pour cela on contrôle le temps d'attaque par la solution humide. La couche sacrificielle 12 a une épaisseur par exemple de l'ordre de 100 nm à 250nm et les parois ont une largeur qui peut être de 2 µm à 5µm. On peut donc avoir des parois dont la largeur est 10 à 50 fois plus importante que l'épaisseur de la couche 12. Même en supposant une gravure latérale (sous les parois) aussi rapide qu'une gravure verticale (sous la couche absorbante) on peut arrêter l'attaque latérale suffisamment tôt, à un moment où la couche absorbante est déjà gravée.

Une variante de réalisation, avec un autre mode de formation des parois, va être décrite en liaison avec les figures 4A - 4G.

Partant de la configuration de la figure 2B, avec le substrat 10 et sa couche sacrificielle, on dépose une couche 16 de masque dur (par exemple une couche de chrome, de 50 nm d'épaisseur), puis un masque 17 de résine (figure 4A), qui vont permettre de définir les emplacements et la largeur des futures parois et de graver la couche sacrificielle, mais aussi, éventuellement, une partie du substrat 10. Les parois seront alors formées dans des zones gravées dans ces couches 16, 17. Si on prolonge la gravure dans le matériau du substrat 10, on renforce la tenue mécanique des futures parois 6 (figures 4B).

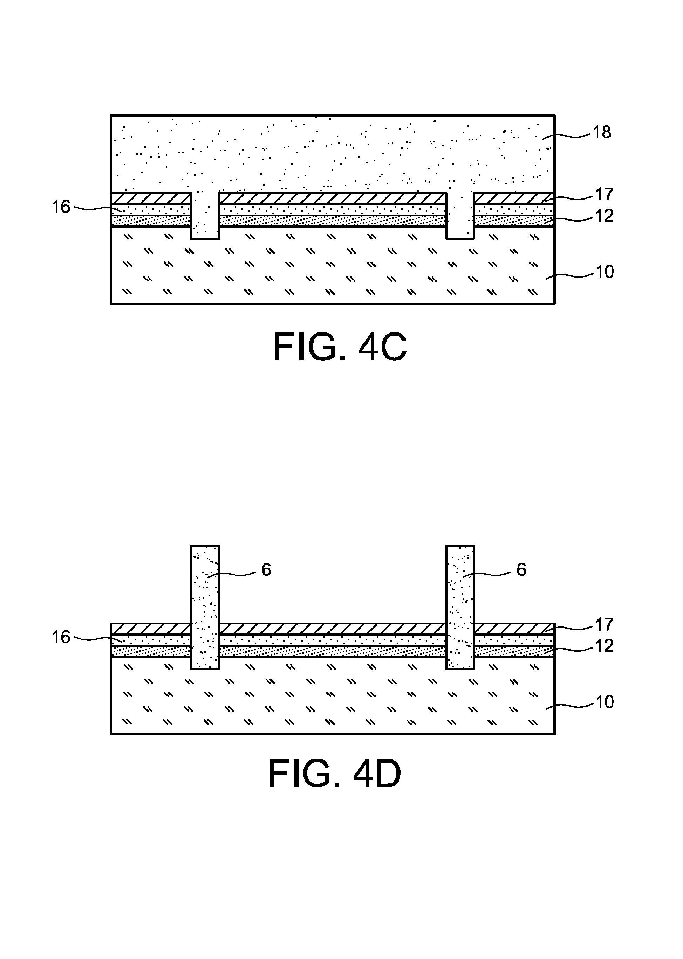

Une résine 18 (figure 4C) est ensuite étalée. Celle-ci pénètre dans les zones gravées, y compris éventuellement dans le substrat 10. A la différence du mode de réalisation précédents, la couche sacrificielle est alors non continue sur l'ensemble du substrat 10.

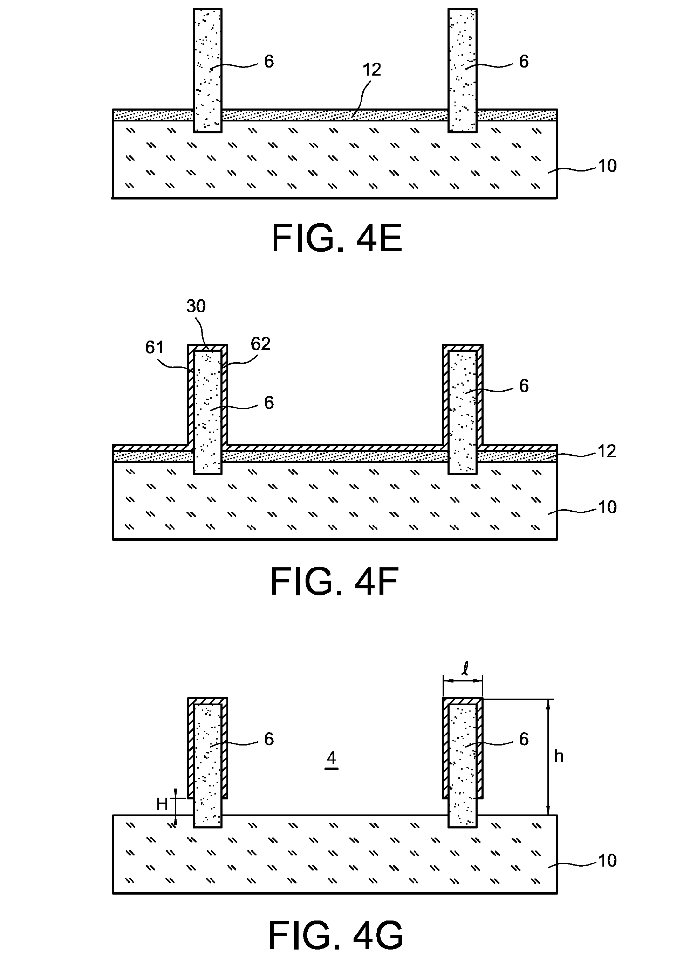

Puis, les parois 6 de la micro-cavité sont formées dans cette résine 18 (figure 4D), par exemple par l'une des techniques déjà citées ci-dessus. La couche 17 de masque et la couche de masque dur 16 sont ensuite éliminées (figure 4E), de préférence par un procédé doux, sélectif par rapport à la couche 12, affectant cette dernière aussi peu que possible. Ce procédé est par exemple une gravure au HF, avec un surfactant, le BE3O:1 donne de bons résultats.

On dépose ensuite (figure 4F) sur l'ensemble du dispositif une couche conforme 30, dont la nature, la porosité et les caractéristiques optiques et d'épaisseur sont celles déjà indiquées ci-dessus, notamment en liaison avec la figure 2E. Là encore, cette couche est appliquée contre, et recouvre de manière continue, la couche sacrificielle 12, mais aussi le sommet 60 des parois 6, les flancs 61, 62 des parois.

On procède ensuite à une gravure humide de la couche sacrificielle 12, par exemple au moyen d'une attaque acide ou basique (figure 4G). Comme dans le cas de la figure 2F, de préférence, la porosité de la couche absorbante 30 présente en fond 4'1 des cavités est ajustée pour permettre l'attaque de la couche sacrificielle 12 et le retrait de la couche absorbante 30 en fond de cavités par effet « lift-off ». Là encore, on peut se référer aux explication ci-dessus (figures 3A - 3C) concernant le mécanisme de gravure à travers les pores 31 de la couche 30 et le choix de la solution de gravure.

Au final (figure 4G), les sommets 60 et les flancs 61, 62 des parois 6 sont toujours recouverts du matériau absorbant 30. Il n'y a cette fois pas de reste de couche sacrificielle sous les parois 6, mais la couche 30 ne recouvre pas les portions inférieures des flancs 61, 62 de la paroi, portions situées entre la surface libre du substrat 10 et le bas de la couche 30, sur une hauteur H sensiblement égale à l'épaisseur de la couche 12 antérieure ou environ égale à la somme des épaisseurs de la couche 12 antérieure et de la couche 30.

Les procédés de réalisation ci-dessus ont été décrits avec une couche 30 à propriétés absorbantes. Mais, en variante, cette couche peut avoir des propriétés réfléchissantes, ce qui peut présenter un intérêt pour la réalisation d'écrans mobiles TFT-LCD, puisqu'une petite partie (4-5%) de structures internes de l'écran est recouverte de microstructures réfléchissantes pour améliorer le contraste : ainsi un utilisateur discerne parfaitement les images même si l'écran est exposé à la lumière directe du soleil. Le procédé de réalisation de cavités à parois réfléchissantes est similaire à celui pour les parois absorbantes.

Dans tous les cas on obtient une structure comportant des cavités 4 délimitées par des parois 6 recouvertes d'une couche 30 de matériau à propriété optique spécifique, absorbante ou réfléchissante. Sous les parois 6 on peut trouver un reste 12' de matériau comme sur la figure 2F. Les parois 6 peuvent avoir une hauteur h, au dessus de la surface libre du substrat 10, de l'ordre de quelques µm à quelques dizaines de µm et par exemple supérieure à 10 µm, par exemple encore comprise entre 5µm et 50 µm. Leur largeur 1 peut être de l'ordre de quelques µm ou être submicronique, par exemple inférieure à 5 µm ou comprise entre 5 µm et 0,5 µm. D'autres gammes de valeur pour ces paramètres géométriques ont déjà été données dans la description ci-dessus.

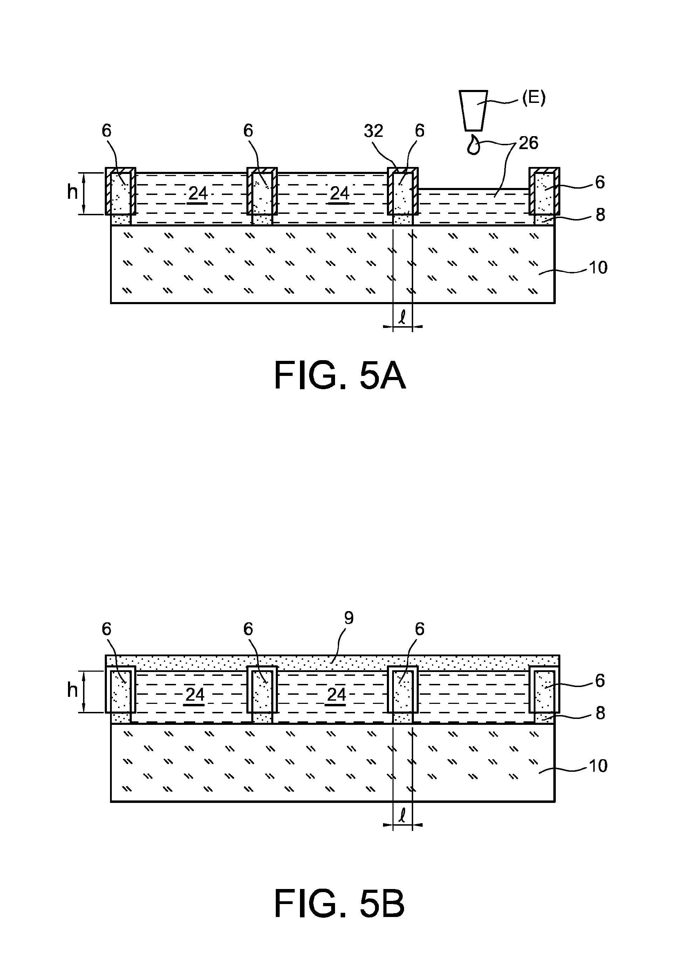

Le remplissage d'une ou plusieurs cavités peut ensuite être réalisé par un équipement E (figure 5A) visant l'intérieur des cavités 4 et projetant le matériau 24 liquide sous forme d'un jet ou de gouttes 26, d'un volume qui peut être de l'ordre de plusieurs picolitres. Le liquide peut être délivré à l'aide d'une technique adaptée à la localisation de faible volume, soit plusieurs dizaines à centaines de picolitres. L'équipement E utilisé peut mettre en oeuvre une technique de dispense de liquide semblable à celle de la dispense par jet d'encre.

Le matériau liquide 24 peut remplir les cavités 4 partiellement ou complètement. Un remplissage total des cavités peut être effectué de manière à atteindre le sommet 62 des parois 6.

Le produit est terminé par le report (dans le cas le plus simple par laminage) d'un film protecteur 9 (figure 5B), tel qu'un film plastique, identique ou non au matériau du support 10. Ce film est éventuellement recouvert des couches fonctionnelles adaptées pour la fonction finale (antireflets, couches dures, antisalissures, ...).

Les figures 5A et 5B concernent le cas d'un composant réalisé à partir de la structure de la figure 2F, mais un autre composant peut être obtenu également à partir de la structure de la figure 4G, par remplissage des cavités et report d'un film protecteur 9, comme expliqué ci-dessus.

Une individualisation du produit final peut être effectuée préalablement à son report sur une surface finale comme par exemple un verre de lunette. Cette individualisation peut être réalisée avantageusement sur le support rigide ayant servi à la réalisation de l'empilement, mais ce n'est pas une nécessité. Si l'individualisation a lieu sur le support de réalisation, celle-ci peut se faire par laser, par ultrasons ou par outil tranchant. Une technique présentant les qualités suivantes sera préférée : assurer un préscellement de la périphérie, assurer un bon état de surface de la tranche pour un scellement optimum, une rapidité de réalisation adaptée à l'industrialisation. Cette individualisation s'accompagne d'un scellement périphérique qui assure l'étanchéité aux gaz et à l'humidité, une bonne tenue mécanique sur la durée de vie du produit, une qualité visuelle adaptée à des produits grand public (lorsque nécessaire, par exemple pour les lunettes).

## Revendications

1. Procédé de formation de cavités (4) d'un dispositif micro-optique, comportant :
a) la formation, sur la surface d'un substrat support (10), d'une couche (12) d'un matériau sacrificiel,
b) la formation de parois (6) desdites cavités, le fond desdites cavités (4) étant formé par ladite couche de matériau sacrificiel,
c) le dépôt conforme d'une couche (30) de matériau poreux, dite couhe optique, présentant une propriété optique déterminée, sur les sommets (60) des parois, sur les flancs (61, 62) des parois, et sur le fond (4') des cavités,
d) la gravure de la couche sacrificielle (12), et l'élimination du matériau de cette couche et du matériau de la partie de la couche (30) de matériau optique présente au fond des cavités (4).

2. Procédé selon la revendication 1, la couche (30) de matériau optique étant une couche absorbante ou une couche réfléchissante.

3. Procédé selon la revendication 2, le matériau optique étant absorbant (30) et comportant du chrome noir, ou du molybdène noir, ou du carbone amorphe.

4. Procédé selon l'une des revendications 1 à 3, le matériau de la couche sacrificielle (12) comportant de l'oxyde de silicium SiO2, ou du nitrure de silicium SiN, ou de l'oxyde d'indium dopé à l'étain (ITO) ou du carbone amorphe, ou du molybdène noir, ou encore du chrome noir.

5. Procédé selon l'une des revendications 1 à 4, la gravure de la couche sacrificielle (12) étant réalisée à l'aide d'une solution de gravure humide à travers le matériau optique poreux (30).

6. Procédé selon l'une des revendications 1 à 5, les parois formées lors de l'étape b) ayant un rapport de forme (h/l) compris entre 10 et 20.

7. Procédé selon l'une des revendications 1 à 6, les parois étant formées :
- en surface de la couche sacrificielle (12), celle-ci étant continue d'une cavité à l'autre jusque pendant l'étape c, les parois reposant, après l'étape d, sur une portion (12') de matériau sacrificiel ;
- ou dans des zone gravées au moins de la couche sacrificielle (12) ;
- ou dans des zones gravées de la couche sacrificielle (12) et du substrat (10).

8. Procédé de formation d'un dispositif micro-optique, comportant :
- la formation de cavités (4) de ce dispositif, comportant la mise en oeuvre d'un procédé selon l'une des revendications précédentes,
- l'introduction d'un ou plusieurs fluides dans lesdites cavités (4) du dispositif,
- la formation d'une couche (9) de fermeture sur les parois des cavités.

9. Dispositif micro-optique, comportant des cavités (4) délimitées par des parois (6), une couche (30) de matériau optique, poreux, étant formée sur les sommets (60) des parois et sur les flancs (61, 62) des parois, tandis que le fond des cavités (4) est exempt de matériau optique.

10. Dispositif selon la revendication 9, la base de chaque paroi (6) reposant :
- sur une portion (12') de matériau sacrificiel, la couche (30) de matériau optique ne recouvrant pas les flancs (12'1, 12'2) de cette portion de matériau sacrificiel ;
- ou sur le substrat ou dans le substrat, la couche (30) de matériau optique ne recouvrant pas une portion des flancs (61, 62) des parois située à proximité de la surface du substrat (10).

11. Dispositif selon l'une des revendications 9 ou 10, chaque cavité étant remplie au moins partiellement d'un fluide (24).

12. Dispositif selon l'une des revendications 9 à 11, la couche (30) de matériau optique étant une couche absorbante ou une couche réfléchissante.

13. Dispositif selon la revendication 12, le matériau optique étant absorbant (30), et comportant du chrome noir, ou du molybdène noir, ou du carbone amorphe.

14. Dispositif selon l'une des revendications 9 à 13, les parois (6) ayant une hauteur comprise entre 1 µm et 100 µm et/ou une largeur comprise entre 0,5 µm et 10 µm.
